**Europäisches Patentamt**

(19) **European Patent Office**

**Office européen des brevets**

(11) Veröffentlichungsnummer: **0 121 800**
**B1**

(12) # EUROPÄISCHE PATENTSCHRIFT

(45) Veröffentlichungstag der Patentschrift:
**19.11.87**

(51) Int. Cl.⁴: **F 24 J 2/28**

(21) Anmeldenummer: **84102625.5**

(22) Anmeldetag: **10.03.84**

(54) Sonnenkollektor mit einer auf der Aussenseite befestigten Schicht.

(30) Priorität: **14.03.83 DE 3309032**

(43) Veröffentlichungstag der Anmeldung:
**17.10.84 Patentblatt 84/42**

(45) Bekanntmachung des Hinweises auf die Patenterteilung:
**19.11.87 Patentblatt 87/47**

(84) Benannte Vertragsstaaten:
**AT BE CH DE FR GB IT LI LU NL SE**

(56) Entgegenhaltungen:
EP - A - 0 028 087
EP - A - 0 065 679
WO - A - 82/03100
BE - A - 889 441
CH - A - 632 832
DE - A - 3 100 521
FR - A - 2 337 319
FR - A - 2 341 827
FR - A - 2 433 716
FR - A - 2 503 855
GB - A - 2 054 004
US - A - 2 595 905

(73) Patentinhaber: **Volksbank Remscheid eG, Tenter Weg 1-3, D-5630 Remscheid-Lennep (DE)**
Patentinhaber: **Kernforschungsanlage Jülich Gesellschaft mit beschränkter Haftung, Leo-Brand-Strasse, D-5170 Jülich (DE)**

(72) Erfinder: **Melchior, Bernd, Burger Strasse 255, D-5630 Remscheid (DE)**
Erfinder: **Grimme, Friedrich Wilhelm, Dr., Fischweiher 5, D-5100 Aachen (DE)**
Erfinder: **Heidrich, Wolfgang, Dr., Girbelsrather Strasse 16, D-5164 Nörvenich (DE)**

(74) Vertreter: **Patentanwaltsbüro Cohausz & Florack, Schumannstrasse 97, D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Sonnenkollektor mit einer auf der Aussenseite davor befestigten, der Sonnenstrahlung ausgesetzten lichtdurchlässigen Schicht, mit einer zwischen der lichtdurchlässigen Schicht und der Kollektorinnenseite angeordneten, Sonnenstrahlung absorbierenden Fläche, von der die Wärme abgeführt wird, und mit mindestens einem an der absorbierenden Fläche angrenzenden und mit einer Latentwärmespeichermasse gefüllten Raum.

Es ist bekannt, die der Sonnenstrahlung ausgesetzte Aussenwand eines Gebäudes derart auszuführen, dass sie nicht nur die Sonnenstrahlungsenergie in Wärme umwandelt, sondern auch speichert (Trombe-Wand). Diese Wände sind aufwendig, zeigen hohe Wärmeverluste und erfordern für die Energiespeicherung grosse Massen.

Der eingangs genannte Stand der Technik ist aus der CH-A-632 832 bekannt. Diese bekannten Sonnenkollektoren zeichnen sich bei guter Umsetzung der eingestrahlten Lichtenergie in Wärmeenergie dagegen durch sehr viel höhere Verluste in der strahlungsfreien Zeit aus.

Aufgabe der Erfindung ist es, einen Sonnenkollektor bzw. eine Fassade der eingangs genannten Art derart zu verbessern, dass bei einfacher Bauweise geringe Wärmeverluste, insbesondere in der strahlungsfreien Zeit, entstehen und darüber hinaus zur Wärmespeicherung nur ein geringes Gewicht erforderlich ist.

Diese Aufgabe wird erfindungsgemäss dadurch gelöst, dass die lichtdurchlässige Schicht eine Schicht aus Schaum (aus Kunststoff, Acryl, Glas), Silgel (Aerogel, amorphem Siliziumoxid) oder senkrecht zur Kollektorfläche stehenden Kapillarröhrchen aufweist. Unter Wand wird auch eine geneigte oder waagerechte Aussenfläche, insbesondere eine Dachfläche eines Gebäudes verstanden. Die Wand kann auch Teil eines Sonnenkollektors sein.

Die Schicht aus Schaum, Silgel oder Kapillarröhrchen lässt die Sonnenstrahlung zur absorbierenden Fläche durch, verhindert aber ein Austreten von Wärme aus dem Kollektor nach aussen. Ein solcher Sonnenkollektor zeichnet sich dadurch aus, dass ein hohes Mass der eingestrahlten Lichtenergie in Form von Wärmeenergie in den Latentwärmespeicher gelangt und die Verluste in der strahlungsfreien Zeit erheblich kleiner als bei dem bekannten Sonnenkollektor sind.

Bei dieser Bauweise wird die in der Absorptionsfläche entstehende Wärme direkt an das Salzhydrat weitergegeben, so dass eine schnelle und verlustarme Speicherung gewährleistet ist. Bei einfachster, stabiler und preiswerter Konstruktion wird eine hohe Energieausbeute erzielt. Diese Sonnenkollektoren sind leicht montierbar und von geringem technischem Aufwand. Sie lassen sich besonders vorteilhaft als Aussenwände oder Teile von Aussenwänden benutzen, so dass die Wand eines Gebäudes als Latentspeicher und zusätzlich als Massenspeicher arbeitet.

Verschmutzungs- und Kondensationsprobleme treten nicht auf, Pumpen und Lüfter sind nur dann erforderlich, wenn eine schnelle Wärmeentnahme erreicht werden soll oder aber die Wärme zu entfernteren Bereichen eines Gebäudes transportiert werden soll. Die Aussenseite solcher Wände lässt sich architektonisch ansprechend gestalten.

Zur Erzielung dieser Vorteile wird auch vorgeschlagen, dass die Schicht aus Schaum (aus Kunststoff, Acryl, Glas) Silgel (Aerogel, amorphem Siliziumoxid) oder Kapillarröhrchen aussen durch eine schützende lichtdurchlässige Schicht abgedeckt ist.

Vorzugsweise wird vorgeschlagen, dass die gefüllten Räume in die lichtdurchlässige Schicht zumindest teilweise hineinragen. Dies führt nicht nur zu einer noch geringeren Bautiefe, sondern auch zu einem optimalen Einfangen der Strahlungsenergie. Ein konstruktiv einfacher und schneller Abtransport der Wärme wird dadurch geschaffen, dass die mit der Latentwärmespeichermasse gefüllten Räume nicht miteinander verbunden sind und zumindest teilweise in mindestens einen von einem Fluid durchflossenen Zwischenraum hineinragen, der zwischen der Absorptionsfläche und der lichtdurchlässigen Schicht und/oder zwischen der Absorptionsfläche und der Kollektorinnenseite liegt.

Eine besonders einfache und wirksame Konstruktion wird dadurch erreicht, dass eine oder beide Seitenwände des Zwischenraums von einer Folie, Platte oder Schicht aus Kunststoff oder Metallblech begrenzt sind, die in den Zwischenraum hineinragenden Räume, Zellen oder Vorsprünge aufweist, die mit der Latentwärmespeichermasse gefüllt und von Rippen, Wellen, Zellen, Kuben, Quadern, Kegeln, Zylindern, Kugeln, Pyramiden und/oder Abschnitten von diesen gebildet sind. Durch die verhältnismässig kleinen Räume wird erreicht, dass Salzkristalle und Schmelze sich nicht entmischen.

Auch wird vorgeschlagen, dass die Folie, Platte oder Schicht an der Aussenseite einer Wand befestigt ist. Dabei kann zwischen Folie, Platte oder Schicht und der Wand eine wärmedämmende Schicht angeordnet sein, so dass die Wärme im wesentlichen nur an das Fluid abgegeben wird.

Ferner wird vorgeschlagen, dass die Folie, Platte oder Schicht an der Innenseite der lichtdurchlässigen Schicht und/oder der Absorptionsfläche angeordnet ist. Eine besonders grosse Strahlungsdurchlässigkeit wird dann erreicht, wenn die lichtdurchlässige Schicht aus Acrylglas besteht.

Für eine einfache und preiswerte Herstellung der speichernden Räume wird vorgeschlagen, dass die mit der Latentwärmepeichermasse gefüllten Räume von den Vertiefungen einer Platte, Folie oder Scheibe aus Metall oder Kunststoff gebildet werden, deren Öffnungen durch eine zweite Platte, Folie oder Scheibe abgedeckt sind. Dabei können die aus Blech bestehenden Platten, Folien oder Scheiben zumindest einseitig mit Kunststoff beschichtet sein und zum Verschliessen der Räume die beschichteten Flächen miteinander verschweisst sein.

Besonders vorteilhaft ist es, wenn durch eine Jalousie und/oder eine reflektierende Bedampfung auf der Aussenseite aufweisende Vorrichtung ein Eindringen der Sonnenstrahlung begrenzbar ist.

Beim Kollektor können die Folien, Platten oder Schichten zwei- oder mehrlagig übereinander angeordnet sein, um dazwischen mehrere Zwischenräume zu bilden. Auch wird vorteilhafterweise vorgeschlagen, dass die die Sonnenstrahlung absorbierende Schicht oder Fläche eine selektive Schicht ist oder trägt.

Zwei Ausführungsbeispiele des Sonnenkollektors bzw. der Fassade sind in der Zeichnung schematisch in einem Ausschnitt dargestellt und werden im folgenden näher beschrieben. Es zeigen:

Fig. 1 einen waagerechten Schnitt durch ein erstes Ausführungsbeispiel und

Fig. 2 einen waagerechten Schnitt durch ein zweites Ausführungsbeispiel.

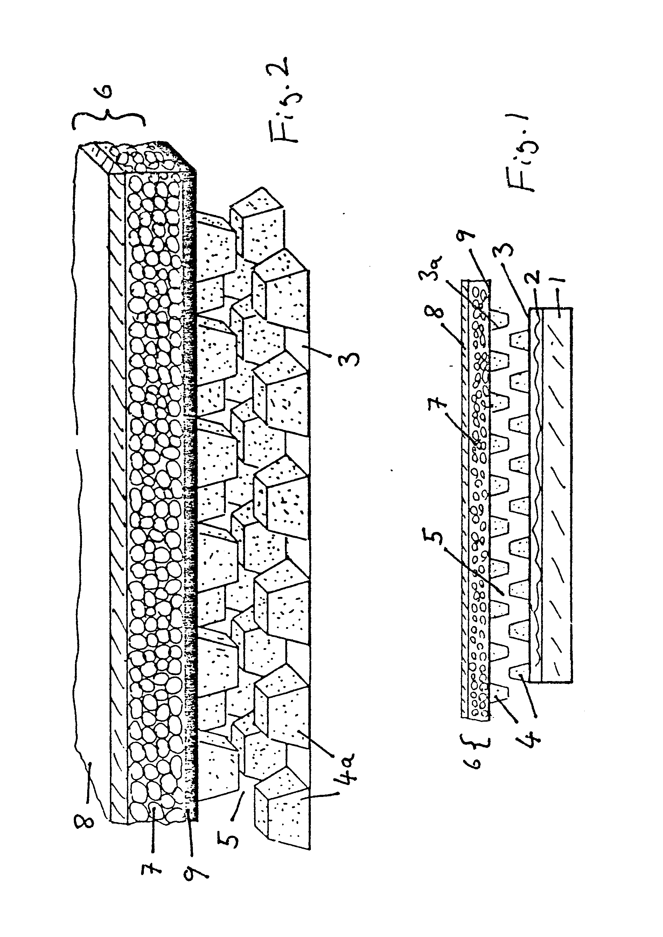

Im Ausführungsbeispiel nach Fig. 1 ist auf einer Wand 1, die aus Mauerwerk oder Beton bestehen kann, auf der Aussenseite eine Wärmedämmung 2 angebracht, die durch eine Folie, Platte oder Schicht insbesondere aus Kunststoff oder Metall, wie Aluminiumblech, 3 überdeckt ist, das tiefgezogene pyramidenstumpfförmige Vertiefungen aufweist, die Räume 4 bilden. Die Grundflächen dieser Pyramidenstümpfe sind der Wand 1 zugekehrt und durch ein zweites ebenes Aluminiumblech verschlossen. Die einander zugekehrten Seiten dieser zwei aneinanderliegenden Aluminiumbleche sind mit Kunststoff beschichtet, so dass ein Aneinanderschweissen dieser Kunststoffschichten einen dichten Verschluss bildet. Die Folien, Platten oder Schichten 3 können zwei- oder mehrlagig angeordnet sein, so dass dazwischen mehrere Räume 5 für ein Fluid bestehen. Hierdurch sind grosse Schichtdicken erreichbar.

Die Räume 4 sind mit Salzhydrat, insbesondere Glaubersalz, einer Mischung aus Salzhydrat und Salz oder einem reziproken Salzpaar gefüllt und so klein gehalten, dass in diesen Räumen Salzkristalle und Schmelze sich nicht entmischen. Dieser Effekt des Sichnichtentmischens ist auch dadurch erreichbar, dass die Räume 4 nicht, wie in Fig. 2 perspektivisch dargestellt, von einzelnen kleinen abgeschlossenen Räumen gebildet werden, sondern röhrenförmig sind, wobei diese länglichen Räume waagerecht liegen. Auch dann wird ein Entmischen verhindert. Damit sind zur Bildung dieser Räume auch Profilbleche verwendbar.

Die Räume 4 können die verschiedensten geometrischen Formen aufweisen, wobei statt Metall auch Kunststoff für die Wandungen verwendet werden kann. Die gefüllten Vorsprünge 4a ragen in einen Zwischenraum hinein, der nach aussen durch eine äussere lichtdurchlässige Schicht 6 abgedeckt ist. An der Innenseite dieser Schicht sind wiederum Bleche oder Kunststoffolien bzw. -platten 3 befestigt, die tiefgezogene Vertiefungen zur Bildung von Räumen 4 aufweisen. Die Vorsprünge bzw. Räume 4 der einen Wandung des Zwischenraums 5 liegen in Höhe der Zwischenräume der Vorsprünge der anderen Wandung, so dass bei platzsparendster Bauweise ein optimaler Wärmeübergang zu dem im Zwischenraum strömenden Fluid gewährleistet ist. Dieses Fluid ist vorzugsweise Luft oder Wasser.

Die äussere lichtdurchlässige Schicht 6 weist eine lichtdurchlässige Schicht 7 aus Schaum (aus Kunststoff, Acryl, Glas), Silgel (Aerogel, amorphem Siliziumoxid) oder Kapillarröhrchen auf. Die Schicht 7 ist nach aussen durch eine dünne Schicht, Platte, Folie oder Lack 8 aus lichtdurchlässigem Kunststoff, insbesondere Acryl, abgedeckt, um die Schicht 7 zu schützen, ein Reinigen zu erleichtern und eine architektonische Gestaltung zu ermöglichen. Hierzu kann die Schicht 8 aus einzelnen Platten, Riemen oder Bauelementen bestehen, die durch Fugen voneinander getrennt sind. Hierdurch kann eine mauerwerkähnliche Struktur erreicht werden. Insbesondere können diese Elemente durch nach innen vorstehende Zapfen sich an dem Blech, der Platte oder Folie 3a abstützen. Dieses die gefüllten Räume bildende Bauelemente 3a weist auf der nach aussen zugekehrten Seite eine dunkle Färbung auf, um dort die Sonnenstrahlung zu absorbieren und in Wärme umzuwandeln. Die dunkle Färbung kann eine selektive Schicht (Oberfläche) sein, insbesondere eine selektive Beschichtung tragen, so dass der wesentliche Teil des Sonnenspektrums absorbiert wird und über ca. $2\mu$ kaum Strahlung abgegeben wird. Zwischen dem Element 3a und der Schaumschicht 7 kann zusätzlich oder alternativ zum Zwischenraum 5 ein nicht dargestellter Zwischenraum sein, der von Fluid, insbesondere Luft oder Wasser, durchströmt ist, um Wärme abzutransportieren.

Die Strömung des Fluids kann durch Konvektion, aber auch durch Pumpen oder Lüfter, erfolgen. Das Ausführungsbeispiel nach Fig. 2 unterscheidet sich von dem nach Fig. 1 im wesentlichen nur dadurch, dass an der Rückseite des Bauelements 3 keine Wärmedämmschicht 2 vorgesehen ist, so dass tagsüber gespeicherte Sonnenenergie nachts direkt in den Raum abgestrahlt werden kann. Beiden Ausführungsbeispielen ist gemeinsam, dass die tagsüber durch die Schichten 7 und 8 eintretende Sonnenstrahlung durch die Absorptionsfläche 9 in Wärme umgesetzt wird und das Salzhydrat in den Räumen 4 zum Schmelzen bringt bzw. die reziproken Salzpaare umwandelt. Nachts wird dann diese Wärme wieder entnommen.

In südlichen Breiten als auch für heisse Sommertage kann die Aussenschicht 6, 8 aussen durch eine Infrarotstrahlung reflektierende Schicht bedampft sein. Auch kann aussen eine beschattende Vorrichtung, insbesondere eine Jalousie befestigt sein.

Die Wand kann eine geneigte oder waagerechte Fläche eines Gebäudes, insbesondere eine Dachfläche bilden. Ferner kann sie einen freistehenden oder mit einem Gebäude verbundenen Sonnenkollektor bilden oder ein Teil davon sein.

Ein Vorteil von Latentspeichern der erfindungsgemässen Art besteht darin, dass Wärme über die Phasenumwandlung gespeichert wird, auskristallisiertes Salz zu gelöstem Salz. Hierdurch werden grosse Energiemengen gespeichert. Die Phasenumwandlung geschieht bei einer bestimmten Temperatur, die einstellbar entsprechend der Salzart und der Zusammensetzung ist. Man kann diese Wärmeaufnahme- und Abgabetemperatur einstellen auf z.B. 14, 15, 16, 18 oder 20°C. Das heisst, wenn die Sonne mit grosser Energie einstrahlt, erhält man dennoch an der Absorptionswand stets die Temperatur, die das Salz bei der Phasenumwandlung selbst erzeugt. Erst wenn die Kapazität erschöpft ist, steigt die Temperatur im Latentspeicher an. Ebenso besteht bei der Wärmeabgabe im Speicher stets eine gleichbleibende Temperatur. Hierdurch wirkt der Speicher als Wärmepuffer, der einen Wärmeausgleich, eine Wärmevergleichmässigung schafft.

In der Anwendung führt dies zu folgenden Vorteilen. In südlichen Ländern, wo ein starkes Tag-Nacht-Temperaturgefälle besteht, wird eine Überhitzung in Gebäuden verhindert, da der Latentspeicher z.B. auf 20°C eingestellt ist. Nachts erfolgt keine grössere Abkühlung, da der Latentspeicher bei 20°C die Wärme wieder abgibt. Es ist nur eine Frage der Speicherkapazität, wann eingestrahlte Energiemengen nicht mehr durch die Phasenumwandlung gespeichert werden können. Besteht zusätzlich eine Luftumwälzungsanlage, so kann dafür gesorgt werden, dass der Luftstrom nicht stets durch die vorgehängte Fassade strömt. Vielmehr kann die Luft im Gebäude verteilt werden, und zusätzlich kann überall, wo die Luft vorbeiströmt, ein Latentspeicher eingebaut werden. Hierdurch kann das gesamte Gebäude als Puffer, als Speicher verwendet werden. Bei starker Sonneneinstrahlung, wie in südlichen Ländern, kann die äussere Glasschicht mit einer infrarot reflektierenden Bedampfung auf der Aussenseite versehen sein, so dass nicht zuviel Wärme in den Speicher gelangt, damit die Kapazität nicht zu früh erschöpft ist. Aus demselben Grund kann vor der Aussenseite eine Beschattungsvorrichtung befestigt sein, die die Sonneneinstrahlung je nach Erfordernis teilweise oder ganz verhindert.

**Patentansprüche**

1. Sonnenkollektor mit einer auf der Aussenseite davor befestigten, der Sonnenstrahlung ausgesetzten lichtdurchlässigen Schicht (6), mit einer zwischen der lichtdurchlässigen Schicht (6) und der Kollektorinnenseite angeordneten, Sonnenstrahlung absorbierenden Fläche (9), von der die Wärme abgeführt wird, und mit mindestens einem an die absorbierende Fläche angrenzenden und mit einer Latentwärmespeichermasse gefüllten Raum (4), dadurch gekennzeichnet, dass die lichtdurchlässige Schicht (6) eine Schicht (7) aus Schaum (aus Kunststoff, Acryl, Glas), Silgel (Aerogel, amorphem Siliziumoxid) oder senkrecht zur Kollektorfläche stehenden Kapillarröhrchen aufweist.

2. Sonnenkollektor nach Anspruch 1, dadurch gekennzeichnet, dass die Schicht (7) aus Schaum (aus Kunststoff, Acryl, Glas) Silgel (Aerogel, amorphem Siliziumoxid) oder Kapillarröhrchen aussen durch eine schützende lichtdurchlässige Schicht (8) abgedeckt ist.

3. Sonnenkollektor nach Anspruch 1 oder 2, dadurch gekennzeichnet, dass die mit der Latentwärmespeichermasse gefüllten Räume (4) in die lichtdurchlässige Schicht (7) zumindest teilweise hineinragen.

4. Sonnenkollektor nach einem der Ansprüche 1 bis 3, dadurch gekennzeichnet, dass die mit der Latentwärmespeichermasse gefüllten Räume (4) nicht miteinander verbunden sind und zumindest teilweise in mindestens einen von einem Fluid durchflossenen Zwischenraum (5) hineinragen, der zwischen der Absorptionsfläche (9) und der lichtdurchlässigen Schicht (7) und/oder zwischen der Absorptionsfläche (9) und der Kollektorinnenseite liegt.

5. Sonnenkollektor nach Anspruch 4, dadurch gekennzeichnet, dass eine oder beide Seitenwände des Zwischenraums (5) von einer Folie, Platte oder Schicht (3) aus Kunststoff oder Metallblech begrenzt sind, die in den Zwischenraum hineinragende Räume, Zellen (4) oder Vorsprünge (4a) aufweist, die mit der Latentwärmespeichermasse gefüllt und von Rippen, Wellen, Zellen, Kuben, Quadern, Kegeln, Zylindern, Kugeln, Pyramiden und/oder Abschnitten von diesen gebildet sind.

6. Sonnenkollektor nach Anspruch 5, dadurch gekennzeichnet, dass die Folie, Platte oder Schicht (3) an der Aussenseite einer Wand eines Gebäudes befestigt ist.

7. Sonnenkollektor nach Anspruch 6, dadurch gekennzeichnet, dass zwischen der Folie, Platte oder Schicht (3) und der Wand des Gebäudes eine wärmedämmende Schicht (2) angeordnet ist.

8. Sonnenkollektor nach einem der Ansprüche 5 bis 7, dadurch gekennzeichnet, dass die Folie, Platte oder Schicht (3) an der Innenseite der lichtdurchlässigen Schicht (7) und/oder der Absorptionsfläche (9) angeordnet ist.

9. Sonnenkollektor nach einem der Ansprüche 1 bis 8, dadurch gekennzeichnet, dass die lichtdurchlässige Schicht (7) aus Acrylglas besteht.

10. Sonnenkollektor nach einem der Ansprüche 1 bis 9, dadurch gekennzeichnet, dass die mit der Lantentwärmespeichermasse gefüllten Räume (4) von den Vertiefungen einer Platte, Folie oder Scheibe aus Metall oder Kunststoff gebildet werden, deren Öffnungen durch eine zweite Platte, Folie oder Scheibe abgedeckt sind.

11. Sonnenkollektor nach Anspruch 10, dadurch gekennzeichnet, dass die aus Blech bestehenden Platten, Folien oder Scheiben zumindest einseitig mit Kunststoff beschichtet sind und zum Verschliessen der Räume (4) die beschichteten Flächen miteinander verschweisst sind.

12. Sonnenkollektor nach einem der Ansprüche 1 bis 11, dadurch gekennzeichnet, dass durch eine Jalousien und/oder eine reflektierende Bedampfung auf der Aussenseite aufweisende Vorrichtung ein Eindringen der Sonnenstrahlung begrenzbar ist.

13. Sonnenkollektor nach einem der Ansprüche 1 bis 12, dadurch gekennzeichnet, dass die Folien, Platten oder Schichten (3) zwei- oder mehrlagig übereinander angeordnet sind, um dazwischen mehrere Zwischenräume (5) zu bilden.

14. Sonnenkollektor nach einem der Ansprüche 1 bis 13, dadurch gekennzeichnet, dass die die Sonnenstrahlung absorbierende Schicht oder Fläche eine selektive Schicht ist oder trägt.

## Claims

1. Solar collector having a translucent layer (6) secured on the outside at the front and exposed to solar radiation, having a surface (9) which absorbs solar radiation, is arranged between the translucent layer (6) and the inside of the collector and from which the heat is conveyed away, and having at least one cavity (4) contiguous with the absorbent surface and filled with a latent heat storage substance, characterised in that the translucent layer (6) has a layer (7) composed of foam (made of plastics material, acrylic, glass), silgel (aerogel, amorphous silica) or capillary tubes arranged at right-angles to the collector surface.

2. Solar collector according to claim 1, characterised in that the layer (7) composed of foam (made of plastics material, acrylic, glass), silgel (aerogel, amorphous silica) or capillary tubes is covered externally by a protective translucent layer (8).

3. Solar collector according to claim 1 or 2, characterised in that the cavities (4) filled with the latent heat storage substance project at least partially into the translucent layer (7).

4. Solar collector according to one of claims 1 to 3, characterised in that the cavities (4) filled with the latent heat storage substance are not connected to one another and project at least partially into at least one intermediate cavity (5) through which fluid flows and which lies between the absorption surface (9) and the translucent layer (7) and/or between the absorption surface (9) and the inside of the solar collector.

5. Solar collector according to claim 4, characterised in that one or both lateral walls of the intermediate cavity (5) are delimited by a film, plate or layer (3) of plastics material or sheet metal which has cavities, cells (4) or projections (4a) which project into the intermediate cavity, are filled with the latent heat storage substance and are formed by ribs, corrugations, cells, cubes, cuboids, cones, cylinders, spheres, pyramids and/ or portions of the latter.

6. Solar collector according to claim 5, characterised in that the film, plate or layer (3) is secured to the outside of a wall of a building.

7. Solar collector according to claim 6, characterised in that there is arranged between the film, plate or layer (3) and the wall of the building a heat-insulating layer (2).

8. Solar collector according to one of claims 5 to 7, characterised in that the film, plate or layer (3) is arranged on the inside of the translucent layer (7) and/or the absorption surface (9).

9. Solar collector according to one of claims 1 to 8, characterised in that the translucent layer (7) comprises acrylic glass.

10. Solar collector according to one of claims 1 to 9, characterised in that the cavities (4) filled with the latent heat storage substance are formed by the indented portions of a plate, film or disc of metal or plastics material, the apertures of which are covered by a second plate, film or disc.

11. Solar collector according to claim 10, characterised in that the plates, films or discs consisting of sheet metal are coated at least on one side with plastics material and for sealing the cavities (4) the coated surfaces are bonded to one another.

12. Solar collector according to one of claims 1 to 11, characterised in that penetration of solar radiation can be limited by a blind and/or a device having a reflective vapour-deposition on the outside.

13. Solar collector according to one of claims 1 to 12, characterised in that the films, plates or layers (3) are arranged on top of one another in two or more layers in order to form between the layers a plurality of intermediate cavities (5).

14. Solar collector according to one of claims 1 to 13, characterised in that the layer or surface absorbing solar radiation is or supports a selective layer.

## Revendications

1. Collecteur solaire muni d'une couche (6) transparente à la lumière exposée au rayonnement solaire disposée sur la couche externe en avant, avec une surface (9) absorbant le rayonnement solaire disposée entre la couche (6) transparente à la lumière et la face intérieure du collecteur et de laquelle la chaleur est évacuée, et avec au moins un volume (4) adjacent à la surface absorbante et empli d'une masse accumulatrice de chaleur latente, caractérisé par le fait que la couche (6) transparente à la lumière présente une couche (7) en mousse (en matière synthétique, acrylique, en verre), en silicagel (aérogel, oxyde de silicium amorphe) ou en bâtonnets capillaires orthogonaux à la surface collectrice.

2. Collecteur solaire selon la revendication 1, caractérisé par le fait que la couche (7) en mousse (en matière synthétique, acrylique, en verre), en silicagel (aérogel, oxyde de silicium amorphe) ou en bâtonnets capillaires est recouverte par une couche (8) protectrice transparente à la lumière.

3. Collecteur solaire selon la revendication 1 ou

**0 121 800**

2, caractérisé par le fait que les volumes (4) emplis d'une masse accumulatrice de chaleur latente font saillie au moins partiellement à l'intérieur de la couche (7) transparente à la lumière.

4. Collecteur solaire selon l'une des revendications 1 à 3, caractérisé par le fait que les volumes (4) emplis d'une masse accumulatrice de chaleur latente ne sont pas reliés les uns aux autres et font saillie au moins partiellement dans au moins un espace intermédiaire (5) traversé par un fluide qui se trouve entre la surface d'absorption (9) et la couche (7) transparente à la lumière et/ou entre la surface d'absorption (9) et la face intérieure du collecteur.

5. Collecteur solaire selon la revendication 4, caractérisé par le fait qu'une paroi latérale de l'espace intermédiaire (5), ou les deux, sont limitées par une feuille, plaque ou couche (3) en matière synthétique ou en tôle métallique, qui présente des espaces, cellules (4) ou saillies (4a) en saillie à l'intérieur du volume intermédiaire, qui sont emplis de la masse accumulatrice de chaleur latente et sont formés par des nervures, des ondulations, des cellules, des cubes, des parallélépipèdes, des cônes, des cylindres, des billes, des pyramides et/ou des sections de ceux-ci.

6. Collecteur solaire selon la revendication 5, caractérisé par le fait que la feuille, plaque ou couche (3) est fixée à la face extérieure d'une paroi d'un bâtiment.

7. Collecteur solaire selon la revendication 6, caractérisé par le fait qu'une couche (2) isolante de la chaleur est disposée entre la feuille, plaque ou couche (3) et la paroi du bâtiment.

8. Collecteur solaire selon l'une des revendications 5 à 7, caractérisé par le fait que la feuille, plaque ou couche (3) est disposée sur la face intérieure de la couche (7) transparente à la lumière et/ou de la surface d'absorption (9).

9. Collecteur solaire selon l'une des revendications 1 à 8, caractérisé par le fait que la couche (7) transparente à la lumière est constituée de verre acrylique.

10. Collecteur solaire selon l'une des revendications 1 à 9, caractérisé par le fait que les volumes (4) emplis d'une masse accumulatrice de chaleur latente sont formés par des évidements d'une plaque, d'une feuille ou d'une galette en métal ou en matière synthétique, dont les ouvertures sont recouvertes par une seconde plaque, feuille ou galette.

11. Collecteur solaire selon la revendication 10, caractérisé par le fait que les plaques, feuilles ou galettes constituées de tôle sont revêtues au moins d'un côté par de la matière synthétique et que, pour la fermeture des volumes (4), les surfaces recouvertes sont soudées les unes aux autres.

12. Collecteur solaire selon l'une des revendications 1 à 11, caractérisé par le fait qu'une pénétration du rayonnement solaire peut être limitée par un dispositif présentant une jalousie et/ou une métallisation réfléchissante sur la face extérieure.

13. Collecteur solaire selon l'une des revendications 1 à 12, caractérisé par le fait que les feuilles, plaques ou couches (3) sont disposées les unes sur les autres en deux ou plusieurs couches pour former entre elles plusieurs volumes intermédiaires (5).

14. Collecteur solaire selon l'une des revendications 1 à 13, caractérisé par le fait que la couche ou surface absorbant le rayonnement solaire est ou porte une couche sélective.

Fig. 2

Fig. 1